## Europäisches Patentamt
## European Patent Office
## Office européen des brevets

(19)

(11) Veröffentlichungsnummer: **0 410 440 B1**

(12) **EUROPÄISCHE PATENTSCHRIFT**

(45) Veröffentlichungstag der Patentschrift: **09.03.94**

(51) Int. Cl.5: **B01D 53/36**

(21) Anmeldenummer: **90114311.5**

(22) Anmeldetag: **26.07.90**

(54) **Katalysator zur Reinigung von Abgasen aus überstöchiometrisch betriebenen Verbrennungsmotoren und Gasturbinen.**

(30) Priorität: **28.07.89 DE 3924983**
**04.09.89 DE 3929297**

(43) Veröffentlichungstag der Anmeldung:
**30.01.91 Patentblatt 91/05**

(45) Bekanntmachung des Hinweises auf die
Patenterteilung:
**09.03.94 Patentblatt 94/10**

(84) Benannte Vertragsstaaten:
**AT CH DE FR GB IT LI SE**

(56) Entgegenhaltungen:
**EP-A- 0 220 416**     **EP-A- 0 286 507**
**EP-A- 0 313 434**     **EP-A- 0 325 511**
**EP-A- 0 326 667**     **DE-A- 3 733 501**

(73) Patentinhaber: **Degussa Aktiengesellschaft**
**Weissfrauenstrasse 9**
**D-60311 Frankturt(DE)**

(72) Erfinder: **Blumrich, Stephan**
**Hanauer Strasse 16**
**D-6052 Mühlheim 2(DE)**
Erfinder: **Brand Reinhold, Dr.**
**Gustav-Adolf-Strasse 25**
**D-6450 Hanau(DE)**
Erfinder: **Engler, Bernd, Dr.**
**Treuener Strasse 2**
**D-6450 Hanau 9(DE)**
Erfinder: **Honnen, Wolfgang, Dr.**
**Heinichenberg 38**
**D-6454 Bruchköbel(DE)**
Erfinder: **Koberstein, Edgar, Dr.**
**Wolfskernstrasse 8**
**D-8755 Alzenau(DE)**

EP 0 410 440 B1

**Beschreibung**

Die Erfindung betrifft einen Katalysator für die Entfernung von Schadstoffen aus Abgasen insbesondere von überstöchiometrisch betriebenen Verbrennungsmotoren und Gasturbinen.

Eine Quelle der bestehenden Umweltverschmutzung sind die Abgase aus Verbrennungsprozessen in Motoren und Gasturbinen. Die in den Abgasen enthaltenen Luftschadstoffe Stickoxide, Kohlenmonoxid und unverbrannte Kohlenwasserstoffe verschiedenster Zusammensetzungen sind hinlänglich hinsichtlich ihrer umweltschädigenden Wirkung bekannt.

Da Primärmaßnahmen zur Verminderung von Schadstoffemissionen, z. B. Abgasrückführung oder Brennraummodifikationen, bislang nicht die erforderliche Minderung der Schadstoffemissionen erbringen oder die Wirkungsgrade der Anlagen unzumutbar verringern, müssen auch bei Verbrennungskraftmaschinen und Gasturbinen Sekundärmaßnahmen, wie z. B. katalytische Abgasreinigungsverfahren eingesetzt werden.

Die bei der Verbrennung von flüssigen oder gasförmigen Kraftstoffen in Verbrennungsmotoren und Gasturbinen entstehenden Abgase können bei überstöchiometrischer Betriebsweise nicht nach dem Dreiwegprinzip gereinigt werden. Die Entfernung von im Abgas vorhandenen unverbrannten Kohlenwasserstoffen und Kohlenmonoxid kann durch katalytische Oxidation an einem Oxidationskatalysator unter Ausnutzung des im Abgas enthaltenen Sauerstoffs zu den umweltverträglichen Verbindungen Kohlendioxid und Wasser durchgeführt werden. Die Entfernung der Stickoxide gelingt wegen des Sauerstoffanteils nur nach Verfahren der selektiven katalytischen Reduktion. Als selektives Reduktionsmittel hat sich z. B. Ammoniak, gegebenenfalls aus einer ammoniakspendenden Chemikalie, wie Harnstoff, bewährt, das an einem geeigneten Katalysator leicht mit den Oxiden des Stickstoffs, aber nur in geringem Maß mit dem Sauerstoff reagiert.

Bei den bisherigen Anlagen mit Verbrennungsmotoren wird die Reinigung der oben beschriebenen Abgase nach folgenden Verfahren durchgeführt:

Nach einem der üblichen Verfahren durchströmen die zwischen 400 und 600° C heißen Abgase direkt nach dem Motor zunächst einen Oxidationskatalysator; dort werden Kohlenmonoxid und Kohlenwasserstoffe mit Hilfe des im Abgas enthaltenen Sauerstoffs zu Kohlenmonoxid und Wasser oxidiert. Anschließend werden die Abgase über einen Wärmetauscher geführt und auf die zur Durchführung der selektiven katalytischen Reduktion notwendige Temperatur (350 bis 400° C) abgekühlt.

Nach Eindüsung von Ammoniak und Vermischung desselben mit dem Abgas reagieren im nachfolgenden Reaktor die Stickoxide mit dem Ammoniak an einem Reduktionskatalysator zu Stickstoff und Wasser. Die Menge des beigemischten Ammoniaks richtet sich dabei nach der im Abgas enthaltenen Stickoxidfracht und der angestrebten Umsatzrate. Aufgrund verfahrenstechnischer Gegebenheiten kommt es dabei durch Strähnenbildung immer wieder zu lokalen Überdosierungen von Ammoniak. Die Folge davon ist der sogenannte Ammoniakschlupf, d. h. unreagiertes Ammoniak gelangt in den Abgasstrom hinter dem Reduktionskatalysator und kann somit über den Schornstein in die Atmosphäre als unerwünschte Sekundäremission entweichen. Beim Betrieb mit schwefelhaltigen Kraftstoffen (z. B. Dieselkraftstoff, schwerem Heizöl oder Biogasen) führt der Ammoniakschlupf infolge von Umsetzungen zwischen Ammoniak und den im Abgas enthaltenen Schwefeloxiden zu korrosiven, klebrigen und wirkungsgradmindernden Ablagerungen aus Ammoniumhydrogensulfat und/oder Ammoniumsulfat in nachgeschalteten Anlagenteilen, z. B. Wärmetauschern. Das damit periodisch notwendig werdende Waschen nachgeschalteter Anlagenteile erzeugt zudem ein Abwasserproblem.

Weitere Nachteile dieser Anordnung sind der durch zahlreiche Erweiterungen und Verengungen des Strömungsquerschnitts entstehende zusätzliche Druckverlust, sowie die zusätzlichen hohen Kosten für die getrennten Reaktoren.

Das in der DE-A-36 01 378 beschriebene "Verfahren zur Reinigung von Oxiden des Stickstoff und Schwefel enthaltenen Abgases aus Verbrennungsanlagen" kann nicht ohne weiteres auf den Anwendungsfall "Verbrennungsmotoren" übertragen werden. Aus wirtschaftlichen Gründen muß, wegen der zu geringen Schwefeldioxidkonzentrationen in Verbrennungsmotoren-und Gasturbinenabgasen eine Schwefelsäuregewinnung entfallen. Das 250 bis 550° C heiße Abgas wird dort nach der Beladung mit der erforderlichen Menge Ammoniak über zwei in einem Reaktor nacheinander angeordnete verschiedene Katalysatortypen geleitet. In der ersten Katalysatorstufe erfolgt die selektive katalytische Reduktion der Stickoxide zu Stickstoff und Wasser. Der nachfolgende Oxidationskatalysator ist bei dem genannten Verfahren auf eine möglichst optimale Schwefeltrioxiderzeugung sowie Säureresistenz und Widerstandsfähigkeit gegen Schwefeltrioxid abgestimmt. Für die schwefeldioxidarmen Abgase aus Verbrennungsmotoren und Gasturbinen muß deswegen ein Katalysator eingesetzt werden, der speziell für die katalytische Oxidation von Kohlenwasserstoffen und Kohlenmonoxid optimiert ist.

Die DE-A-37 33 501 beschreibt ein Verfahren zur Verminderung von Emissionen beim Betrieb von stationären Verbrennungsmotoren. Für die Durchführung des Verfahrens werden zwei unterschiedliche Teilkatalysatoren, ein Reduktionskatalysator für die selektive Reduktion der Stickoxide mit Ammoniak und ein Oxidationskatalysator hintereinander eingesetzt.

Die EP-A-0 313 434 beschreibt einen Katalysator auf einem inerten Träger, der an- und abströmseitig mit verschiedenen katalytisch aktiven Komponenten imprägniert ist. Zur Aufnahme der katalytisch aktiven Komponenten ist der Träger auf seiner ganzen Länge mit einer einheitlichen Trägerschicht beschichtet.

Gegenstand der Erfindung ist ein Katalysator, der es erlaubt, Nachteile herkömmlicher Abgasreinigungsverfahren bei Verbrennungsmotoren und Gasturbinen zu vermeiden, insbesondere, wenn diese überstöchiometrisch betrieben werden.

Der Katalysator besteht aus zwei Teilkatalysatoren, einem anströmseitigen Katalysator zur selektiven Reduktion von Stickoxiden mittels Ammoniakgas, gegebenenfalls aus einer Ammoniak-spendenden Verbindung und aus einem abströmseitigen Oxidationskatalysator. Der Katalysator ist dadurch gekennzeichnet, daß der Oxidationskatalysator als Beschichtung auf einem abströmseitigen Abschnitt des einstückigen als Vollextrudat in Wabenform ausgeführten Reduktionskatalysators aufgebracht ist, wobei der mit dem Oxidationskatalysator beschichtete Bereich 20 bis 50 % des gesamten Katalysatorvolumens ausmacht. Sein Prinzip beruht also darin, daß die Abgase in einem einzigen wabenförmigen Katalysatorelement unmittelbar nacheinander mit zwei verschiedenen, jeweils reaktionsspezifischen optimierten Katalysatorformulierungen, die zum Teil an sich bekannt sein können, in Kontakt gebracht werden; die unterschiedlichen Katalysatorzonen (oder Reaktionszonen) für die selektive Stickoxidreduktion und die darauf folgende Oxidation wird im folgenden als Zone 1 für den Teil der Reduktion und als Zone 2 für den Teil der Oxidation bezeichnet.

In einer vorteilhaften Anwendungsform wird auf den Reduktionskatalysator in Wabenform, bestehend aus einer Metalloxidmischung oder einem Metall enthaltenden Zeolithen entsprechend den Patentansprüchen auf dem abströmseitigen Abschnitt (Zone 2), ein Oxidationskatalysator als Überzug aufgebracht.

Das schadstoffhaltige Abgas wird der den Katalysator enthaltenden Abgasreinigungsanlage in einem Temperaturbereich zwischen 250 und 550° C zugeführt. Entscheidungskriterium für das in einer bestimmten Anlage gewählte Temperaturniveau sind technische oder wirtschaftliche Gründe, wie Abgastemperatur des Motors, Ammoniakoxidation, Wärmebündelung, Produktionskosten, geforderte Minderungsraten für die Schadstoffe etc.

Das Abgas wird nach Eintritt in eine der Katalysatoranordnung vorgeschaltete Mischeinrichtung mit dem Reduktionsmittel (Ammoniak, gegebenenfalls aus einer ammoniakspendenden Chemikalie) vermischt.

Anschließend wird es über die Katalysatorzone 1 geleitet, in der die selektive katalytische Reduktion der Stickoxide zu Stickstoff und Wasser erfolgt. In der direkt auf dem selben Katalysatorelement nachfolgenden Zone 2 werden nicht nur Kohlenmonoxid und die Kohlenwasserstoffe oxidiert, sondern auch das durch Zone 1 durchgetretene Ammoniak entfernt. Spezielle, an sich bekannte Formulierungen für Oxidationskatalysatoren sind auch geeignet für die Überführung von Schwefeldioxid in Schwefeltrioxid. Die Endprodukte der katalytischen Reduktions- und Oxidationsvorgänge sind Kohlendioxid, Wasser und Stickstoff bzw. auch Schwefeltrioxid.

Das nach Verlassen der Oxidationszone aus dem Reaktor austretende Abgas enthalt kein Ammoniak mehr, da das Ammoniak zu Stickstoff und Stickoxiden oxidiert wird. Es kann deswegen nicht mehr zu den Verklebungen, Verkrustungen und Korrosion durch Ammoniaksalze in der Anlage kommen. Die leichte Erhöhung der Stickoxidemission durch das zu Stickoxiden oxidierte Ammoniak kann durch einfache Regelungsmaßnahmen auf ein Minimum begrenzt werden.

Die Verwendung der erfindungsgemäßen einstückigen aber zweizonigen Katalysatoren bringt neben den schon beschriebenen verfahrenstechnischen Vorteilen noch weitere Vorteile: Durch den Wegfall mehrfacher Erweiterungen und Verengungen des Strömungsquerschnitts in gebräuchlichen Serienschaltungen und von Turbulenzzonen zwischen mehreren Katalysatorelementen wird der Druckverlust deutlich herabgesetzt.

Ein weiterer nennenswerter Vorteil ist die Kostensenkung gegenüber dem Stand der Technik durch die Verringerung der Anzahl der Reaktoren. Die Kosten für Verpackung und Lagerung der Katalysatorelemente im Reaktor können bei Anordnung der erfindungsgemäßen Weise weiter vermindert werden.

Für die Reduktion und gleichzeitig als Träger für den als Zone 2 bezeichneten Oxidationsbereich können mit Vorteil Vollextrudate in Wabenform gemäß den abhängigen Ansprüchen 2 bis 5 dieser Patentschrift eingesetzt werden, also sog. Vollkatalysatoren, bestehend aus Titandioxid mit Zusätzen von z. B. Wolfram- und Vanadiumoxid z. B. gemäß DE-A-24 58 888 (Anspruch 2), DE-A-37 40 289 (Anspruch 3), DE-A-39 06 136 (Anspruch 4) oder bestehend aus Zeolith z. B. entsprechend DE-A-38 41 990 (Anspruch 5).

Die Oxidationszone 2 kann so ausgeführt sein, daß eine geeignete Katalysatorbeschichtung auf den Reduktionskatalysator in einem rückwärtigen Abschnitt desselben aufgebracht ist, wobei, je nach Auslegungsfall, der mit der oxidierenden Formulierung beschichtete Bereich 20 bis 50 % des Katalysatorvolumens einnimmt. Im allgemeinen genügt es, 25 bis 35 % eines jeden Katalysatorelements mit dem Oxidationskatalysator zu beschichten. Die Formulierung des Oxidationskatalysators kann (in Anlehnung an DE-A-29 07 106) derjenigen von Anspruch 6 entsprechen bzw. aus $\gamma$-Aluminiumoxid mit Zusätzen von 3 bis 35 Gew.-% Ceroxid und 1 bis 5 Gew.-% Zirkonoxid sowie Platin,

Platin/Palladium, Platin/Rhodium oder Palladium bestehen, wobei das Edelmetall in reduzierter hochdispersiver Form auf dem Katalysator vorliegt.

Günstig ist, wenn der Edelmetallanteil in der katalytischen Beschichtung der Zone 2 0,25 bis 2,8 Gew.-% beträgt.

Beispiele 1 - 4

In Anlehnung an die DE-A-37 40 289, Beispiel 17, wird ein Katalysator in Wabenform (Abmessungen: 150 mm x 150 mm x 440 mm, Zellteilung: 3,6 mm) mit einem Gewichtsverhältnis $TiO_2/WO_3$ von 9 : 1 und einem $V_2O_5$-Gehalt von 0,45 Gew.% hergestellt. Als Titandioxidkomponente wird ein flammhydrolytisch hergestelltes $TiO_2$ entsprechend Anspruch 3 verwendet.

Zur Aufbringung der Oxidationbeschichtung auf 30 % der Gesamtlänge werden im ersten Arbeitsschritt ein Oxidgemisch aus $\gamma$-$Al_2O_3$, $CeO_2$ und $ZrO_2$ wie folgt aufgebracht:

In einer 25 Gew.% enthaltenden wäßrigen Suspension von $\gamma$-Aluminiumoxid werden pro 100 g $\gamma$-$Al_2O_3$ 60 g $CeO_2$ und 3 g $ZrO_2$ in Form ihrer Acetate zugesetzt. Eine Beschichtung erfolgt durch Eintauchen der Abströmseite des oben erwähnten Wabenkörpers entsprechend 30 % der Gesamtlänge in diese Suspension. Im Anschluß an den Tauchschritt werden die Kanäle des Monoliths mit Preßluft freigeblasen und bei 150° C im Luftstrom getrocknet. Danach wird bei 550° C zwei Stunden getempert. Als Mischoxidbeschichtung verbleiben 80 - 90 g pro 1 Liter Katalysatorvolumen.

Das Edelmetall wird durch Imprägnierung mit einer wäßrigen Lösung von Hexachloroplatinsäure, Palladiumchlorid oder Rhodiumchlorid erreicht. Nach Trocknung bei 150° C werden die Edelmetalle bei 550° C in Wasserstoffatmosphäre reduziert. Die Edelmetallmengen sind in Tabelle 2 angegeben.

Tabelle 2

| Edelmetallmengen in der Oxidkatalysatorbeschichtung | | |
|---|---|---|
| Beispiel | Edelmetall | Edelmetallgehalt bezogen auf die Oxidationsbeschichtung Gew.% |
| 1 | Pt | 1,5 |
| 2 | Pt/Pd (2 : 1) | 1,5 |
| 3 | Pt/Rh (10 : 1) | 1,5 |
| 4 | Pd | 1,5 |

Beispiel 5

Entsprechend der DE-A-24 58 888, Beispiel X-1, wird ein Wabenkörper mit den gleichen geometrischen Abmessungen, wie in Beispiel 1 beschrieben, hergestellt. Das $TiO_2$ : $WO_3$ Gewichtsverhältnis beträgt 9 : 1, der $V_2O_5$-Gehalt 0,45 Gew.%. Als $TiO_2$-Komponente wird gefälltes $TiO_2$ vom Anatas-Typ mit einer spezifischen Oberfläche von 70 m$^2$/g verwendet. Die Aufbringung der Oxidationskatalysatorbeschichtung erfolgt wie in den Beispielen 1 - 4 beschrieben von der Abströmnseite her auf 20 % der Gesamtlänge. Als Edelmetall wird 2,5 Gew.% Platin, bezogen auf die Beschichtung, aufgebracht.

Beispiel 6

Entsprechend der DE-A-38 41 990, Beispiel 32, wird ein zeolithischer Wabenkörper mit den gleichen geometrischen Abmessungen, wie in Beispiel 1 beschrieben, hergestellt.

Als Zeolith wurde Mordenit mit dem Modul 19 ($SiO_2/Al_2O_3$-Molverhältnis) eingesetzt. Die durch Ionenaustausch eingebrachten Aktivkomponenten sind 1,0 Gew.% Kupfer, 0,58 Gew.% Eisen und 0,1 Gew.% Cer.

Die Aufbringung der Oxidationskatalysatorbeschichtung erfolgt, wie in den Beispielen 1 - 4 beschrieben, auf 50 % der Gesamtlänge. Als Edelmetall wird 1,0 Gew.% Platin aufgebracht.

Anwendungsbeispiel

Eine Pilotanlage, die mit Abgasen aus einem Gasmotor mit Magerbetrieb beschickt wurde, wurde zur Testung der erfindungsgemäßen Katalysatoren eingesetzt. Die Katalysatoren waren erfindungsgemäß als Vollextrudate, bestehend aus Wabenkörpern mit einer Kantenlänge von 150 mm x 150 mm und einer Länge von 440 mm ausgeführt. Die Zellteilung (1 Steg + 1 Zellöffnung) betrug 3,6 mm.

Die technischen Daten der Pilotanlage können wie folgt zusammengefaßt werden:

| | |
|---|---|
| Rauchgasdurchsatz | $105 \ m^3/h$ i.N. |
| Raumgeschwindigkeiten | |
| $-$ $NO_x$-Reduktion | $15.000 \ h^{-1}$ |
| $-$ CO/HC-Oxidation | $36.000 \ h^{-1}$ |
| Abgasgeschwindigkeit im Reaktor (Leerrohrgeschw.) | $1,2 \ m/s$ |
| Rauchgastemperatur | $400 - 520^0 \ C$ |
| Molverhältnis $NH_2/NO_x$ | $0,8 - 1,2$ |

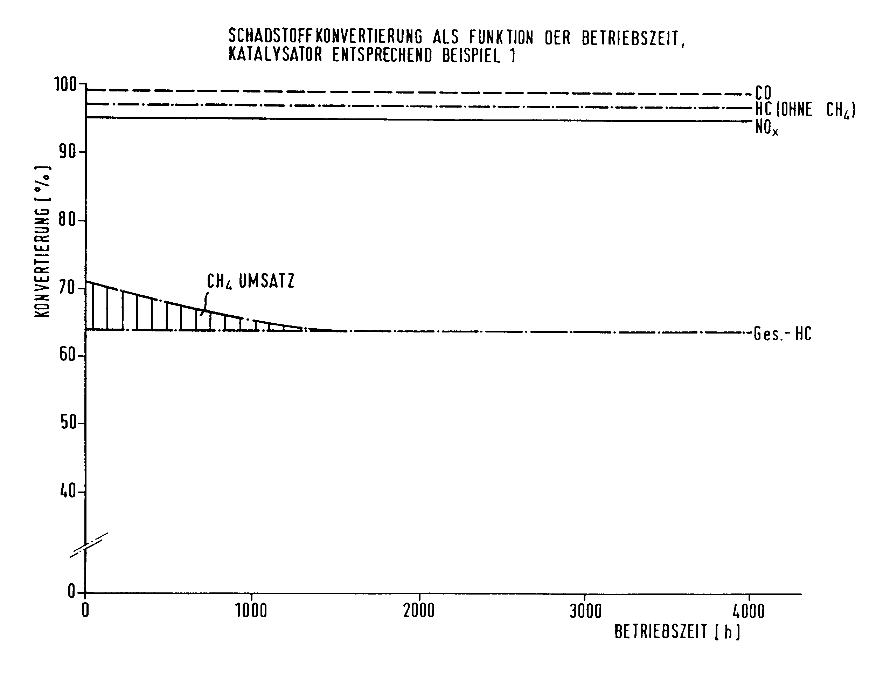

Nach 4000 Betriebsstunden konnten bei einem Katalysator entsprechend Beispiel 1 und einem Molverhältnis Ammoniak/Stickoxid von 0,95 Konversionsraten für Stickoxid um 95 % gemessen werden. Die Konversionsraten für Kohlenmonoxid und Kohlenwasserstoffe sind Tabelle 1 und der Graphik Abb. 1 zu entnehmen.

Tabelle 1

| Konversionsraten der Schadstoffe $NO_x$, CO und HC nach 4000 Betriebsstunden | | | | |
|---|---|---|---|---|
| Schadstoff | Konzentration | | Konversionsgrad % | Meßmethode |
| | vor Kombikatalysator | nach Kombikatalysator | | |
| $NO_x$ | 3000 ppm | 160 ppm | 95* | Chemielumineszenz-Methode |
| CO | 2300 ppm | 15 ppm | 99 | NDIR |
| Ges.-HC | 3600 ppm | 1300 ppm | 64 | FID |
| HC ohne CH4 | 2300 ppm | 80 ppm | 97 | FID |
| 02 | 7 Vol.% | 6,5 Vol.% | - | Paramagnetism. |
| $NH_3$ | 2790 ppm | nicht nachweisbar | | naßchem. Absorption und Analyse |

* Molverhältnis 0,95, Betriebstemperatur 480° C

Unter den angewandten Betriebsbedingungen konnte in keinem Fall Ammoniak im Abgas hinter dem katalytischen Konverter nachgewiesen werden. Die Anlage arbeitet in weiten Betriebsbereichen ammoniakschlupffrei.

Die Schadstoffkonvertierung als Funktion der Betriebszeit ist in Abb. 1 graphisch dargestellt. Die Umsatzkurve für die Kohlenwasserstoffe inklusive Methan (Ges.-HC) zeigt, daß der frische Katalysator auch Methan oxidiert. Der Methanumsatz geht allerdings im Verlauf von ca. 1000 Betriebsstunden zurück.

**Patentansprüche**

**1.** Katalysator zur Reinigung von Abgasen insbesondere aus überstöchiometrisch betriebenen Verbrennungsmotoren und Gasturbinen bestehend aus zwei Teilkatalysatoren, einem anströmseitigen Katalysator zur selektiven Reduktion von Stickoxiden mittels Ammoniak, gegebenenfalls aus einer Ammoniak-

EP 0 410 440 B1

spendenden Verbindung, und aus einem abströmseitigen Oxidationskatalysator,
**dadurch gekennzeichnet,**
daß der Oxidationskatalysator als Beschichtung auf einem abströmseitigen Abschnitt des einstückigen als Vollextrudat in Wabenform ausgeführten Reduktionskatalysators aufgebracht ist, wobei der mit dem Oxidationskatalysator beschichtete Bereich 20 bis 50 % des gesamten Katalysatorvolumens ausmacht.

2. Katalysator nach Anspruch 1,
**dadurch gekennzeichnet**,
daß der als Vollkatalysator ausgeführte Reduktionskatalysator aus einer innigen Mischung der Komponenten
    (A) Titan in Form von Oxiden,
    (B) wenigstens ein Metall aus der Gruppe
        B.1 Eisen und Vanadium in Form von Oxiden und/oder
        Sulfaten, und/oder der Gruppe
        B.2 Molybdän, Wolfram, Niob, Kupfer, Chrom in Form von Oxiden,
        und gegebenenfalls
    (C) Zinn in Form von Oxiden, und gegebenenfalls
    (D) Metalle aus der Gruppe Beryllium, Magnesium, Zink, Bor, Aluminium, Yttrium, Seltene Erdenelemente, Silicium, Antimon, Wismut und Mangan in Form von Oxiden,
besteht, wobei die Komponenten in den Atomverhältnissen
     A : B : C : D
 = 1 : 0,01 bis 10 : 0 bis 0,2 : 0 bis 0,15 vorhanden sind.

3. Katalysator nach Anspruch 1,
**dadurch gekennzeichnet**,
daß als Vollkatalysator ausgeführte Reduktionskatalysator aus einem innigen Gemisch von Titandioxid als Komponente A), Wolframoxid als Komponente $B_1$ und Vanadium-, Eisen-, Niob-, Kupfer-, Chrom- und/oder Molybdänoxid als Komponente $B_2$ mit einem Atomverhältnis zwischen den Metallen der Komponenten A) und B) von 1 : 001 bis 1 besteht, wobei die Komponente A) ein durch Flammenhydrolyse von $TiCl_4$ erhältliches feinteiliges Oxid mit einer überwiegend Anatas aufweisenden Röntgenstruktur, einer BET-Oberfläche von 50 ± 15 $m^2/g$, einer Dichte von 3,8 $g/cm^3$, einer mittleren Größe der Primärteilchen von 30 nm, einem in 4 %iger wäßriger Dispersion gemessenen pH-wert von 3 - 4 und einem bei pH 6,6 liegenden isoelektrischen Punkt ist, das nach zweistündigem Glühen bei 1000° C einen $TiO_2$-Gehalt von 99,5 Gew.-%, einen $Al_2O_3$-Gehalt von 0,3 Gew.-%, einen $SiO_2$-Gehalt von 0,2 Gew.-%, einen $Fe_2O_3$-Gehalt von 0,01 Gew.-% und einen HCl-Gehalt von 0,3 Gew.-% aufweist und das einen Gewichtsverlust nach zweistündigem Trocknen bei 105° C von 1,5 Gew.-% sowie nach zweistündigem Glühen bei 1000° C von 2 Gew.-% zeigt.

4. Katalysator nach Anspruch 1,
**dadurch gekennzeichnet**,
daß der als Vollkatalysator ausgeführte Reduktionskatalysator die Komponenten
    A) Titanoxid
    $B_1$) mindestens ein Oxid von Wolfram, Silicium, Bor, Aluminium, Phosphor, Zirkonium, Barium, Yttrium, Lanthan, Cer und
    $B_2$) mindestens ein Oxid von Vanadium, Niob, Molybdän, Eisen, Kupfer, Chrom
mit einem Atomverhältnis zwischen den Elementen der Komponenten A) und B) von 1 : 0,001 bis 1, vorzugsweise 1 : 0,002 bis 0,4 enthält und die Komponente A) in Form eines reaktiven hochoberflächigen Titanoxids mit einer BET-Oberfläche von 40 - 500, vorzugsweise 50 - 300, insbesondere 60 - 150 $m^2/g$, das vollständig oder zum überwiegenden Teil in der Anatasmodifikation vorliegt, anwesend ist.

5. Katalysator nach Anspruch 1,
**dadurch gekennzeichnet**,
daß der Reduktionskatalysator aus einem Kupfer und/oder Eisen sowie gegebenenfalls noch Cer oder Mo enthaltenden säurebeständigen Zeolith-Vollkatalysator, gegebenenfalls vom Mordenit-Typ, besteht.

6. Katalysator nach den Ansprüchen 1 bis 5,
**dadurch gekennzeichnet**,
daß der als Beschichtung auf einem abströmseitigen Abschnitt des Reduktionskatalysators vorliegende

6

EP 0 410 440 B1

Oxidationskatalysator aus 2 bis 70 Gew.-% $CeO_2$, 0 bis 20 Gew.-% $ZrO_2$ und als komplementärem Anteil zu 100 Gew.-% aus einem Aluminiumoxid der Übergangsreihe besteht, wobei das Aluminiumoxid Eisenoxid, Erdalkalioxide und/oder Seltene Erdmetalloxide enthalten kann und daß auf dieser Trägerschicht 0,01 bis 3 Gew.-%, bezogen auf das Gesamtgewicht der Trägerschicht, Platin, Palladium und/oder Rhodium mit einem Gewichtsverhältnis zwischen Platin und/oder Palladium und dem gegebenenfalls anwesenden Rhodium von 2 : 1 bis 30 : 1 aufgebracht sind.

7. Verwendung des Katalysators nach einem der Ansprüche 1 bis 6 zur katalytischen Reinigung von Abgasen insbesondere aus überstöchiometrisch betriebenen Verbrennungsmotoren und Gasturbinen von den Schadstoffen Stickoxide, Kohlenwasserstoffe, Kohlenmonoxid, Ammoniakschlupf aus der Entstickung und gegebenenfalls Schwefeldioxid.

**Claims**

1. A catalyst for purifying exhaust gases, more particularly from internal combustion engines and gas turbines operated at above the stoichiometric ratio, the catalyst comprising two component catalysts, i.e. a leading-edge catalyst for selective reduction of nitrogen oxides by ammonia, optionally from an ammonia-dispensing compound, and a trailing-edge oxidation catalyst,
characterised in that the oxidation catalyst is applied as a coating to a trailing-edge portion of the reduction catalyst, which is a one-piece full type extrudate in honeycomb form, and the region coated with the oxidation catalyst makes up 20 to 50% of the total catalyst volume.

2. A catalyst according to claim 1,
characterised in that the full type reduction catalyst comprises an intimate mixture of the following components:
  (A) Titanium in the form of oxides,
  (B) At least one metal from the following group:
    B.1 Iron and vanadium in the form of oxides and/or
    sulphates, and/or the group
    B.2 Molybdenum, tungsten, niobium, copper or chromium in the form of oxides,
  and optionally
  (C) Tin in the form of oxides,
  and optionally
  (D) Metals from the group beryllium, magnesium, zinc, boron, aluminium, yttrium, rare earth elements, silicon, antimony, bismuth and manganese in the form of oxides,
the components being present in the atomic ratios:
  A : B : C : D
= 1 : 0.01 to 10 : 0 to 0.2 : 0 to 0.15.

3. A catalyst according to claim 1,
characterised in that the full type reduction catalyst comprises an intimate mixture of titanium dioxide as component A), tungsten oxide as component $B_1$ and vanadium or iron or niobium or copper or chromium and/or molybdenum oxide as component $B_2$, the atomic ratio of the metals in components A) and B) being 1 : 001 to 1, the component A) being a finely-divided oxide obtainable by flame hydrolysis of $TiCl_4$ and having a mainly anatase X-ray structure, a BET surface area of $50 \pm 15$ $m^2/g$, a density of 3.8 $g/cm^3$, an average primary particle size of 30 nm, a pH of 3 - 4 measured in 4% aqueous dispersion and an isoelectric point at pH 6.6, the substance having a $TiO_2$ content of 99.5 wt.%, an $Al_2O_3$ content of 0.3 wt.%, an $SiO_2$ content of 0.2 wt.%, an $Fe_2O_3$ content of 0.01 wt.% and an HCl content of 0.3 wt.% after calcining at 1,000°C for 2 hours, and having a weight loss of 1.5 wt.% after drying at 105°C for 2 hours and 2 wt.% after calcining at 1,000°C for 2 hours.

4. A catalyst according to claim 1,
characterised in that the full type reduction catalyst contains the following components:
  A) Titanium oxide
  $B_1$) At least one oxide of tungsten, silicon, boron, aluminium, phosphorus, zirconium, barium, yttrium, lanthanum or cerium and
  $B_2$) At least one oxide of vanadium, niobium, molybdenum, iron, copper or chromium,
the atomic ratio of the elements in components A) and B) being from 1 : 0.001 to 1, preferably 1 : 0.002

7

to 0.4, and the component A) being present in the form of a reactive high surface-area titanium oxide having a BET surface area of 40 -500, preferably 50 - 300, more particularly 60 - 150 $m^2$/g, and completely or mainly in the anatase modification.

**5.** A catalyst according to claim 1, characterised in that the reduction catalyst is an acid-resistant zeolite full type catalyst, optionally of mordenite type, containing copper and/or iron and optionally cerium or molybdenum.

**6.** A catalyst according to claims 1 to 5, characterised in that the oxidation catalyst in the form of a coating on a trailing-edge portion of the reduction catalyst comprises 2 to 70 wt.% $CeO_2$ and 0 to 20 wt.% $ZrO_2$, the remainder to 100% consisting of an aluminium oxide in the transition series, the aluminium oxide optionally containing iron oxide, alkaline earth-metal oxides and/or rare-earth metal oxides, and 0.01 to 3 wt.%, relative to the total weight of the carrier layer, of platinum, palladium and/or rhodium is applied to the carrier layer, the ratio by weight of platinum and/or palladium to the optionally-present rhodium being from 2 : 1 to 30 : 1.

**7.** Use of the catalyst according to any of claims 1 to 6 for catalytic purification of waste gases, more particularly from internal combustion engines and gas turbines operated above the stoichiometric ratio, from pollutant nitrogen oxides, hydrocarbons, carbon monoxide, ammonia drift from nitrogen removal and optionally sulphur dioxide.

**Revendications**

**1.** Catalyseur pour l'épuration des gaz d'échappement en particulier provenant de moteurs à combustion et de turbines à gaz fonctionnant de manière sur-stoechiomètrique, formé de deux catalyseurs partiels, d'un catalyseur dans le sens de l'entrée pour la réduction sélective des oxydes d'azote à l'aide d'ammoniac, le cas échéant à partir d'un composé qui dégage de l'ammoniac, et d'un catalyseur d'oxydation dans le sens de la sortie, caractérisé en ce que le catalyseur d'oxydation est appliqué en tant que recouvrement sur une portion du côté de la sortie du catalyseur de réduction réalisé en une seule pièce, sous forme de nid d'abeilles comme produit d'extrusion complet, catalyseur pour lequel la zone recouverte du catalyseur d'oxydation représente de 20 à 50 % du volume total de catalyseur.

**2.** Catalyseur selon la revendication 1, caractérisé en ce que le catalyseur de réduction réalisé sous forme de catalyseur complet est formé d'un mélange intime des composants :

A - Titane sous forme d'oxydes

B - au moins un métal choisi dans le groupe

B.1 fer et vanadium sous forme d'oxydes et/ou de sulfates et/ou un métal choisi dans le groupe du

B.2 molybdène, tungstène, niobium, cuivre, chrome sous forme d'oxydes et le cas échéant

C - étain sous forme d'oxydes et le cas échéant

D - des métaux choisis dans le groupe constitué par le béryllium, le magnésium, le zinc, le bore, l'aluminium, l'yttrium, les éléments de terres rares, le silicium, l'antimoine, le bismuth et le manganèse sous forme d'oxydes

dans lequel les composants sont présents dans le rapport atomique

A : B : C : D = 1 : 0,01 à 10 : 0 à 0,2 : 0 à 0,15

**3.** Catalyseur selon la revendication 1, caractérisé en ce que le catalyseur de réduction réalisé sous forme d'un catalyseur complet consiste en un mélange intime d'oxyde de titane comme composant A, d'oxyde de vanadium, comme composant $B_1$ et d'oxyde de vanadium, de fer, de niobium, de cuivre, de chrome et/ou de molybdène, comme composant $B_2$ avec un rapport atomique entre les métaux A et B, allant de 1 : 0,001 à 1 dans lequel le composant A est un oxyde finement divisé obtenu par hydrolyse à la flamme de $TiCl_4$ ayant une structure aux rayons X manifestant d'une manière prépondérante le type anatase, une surface BET de 50 ± 15 $m^2$/g, une densité de 3,8 $g/cm^3$, une taille moyenne des particules primaires de 30 nm, une valeur de pH mesurée sur une dispersion aqueuse à 4 %, de 3 à 4 et un point isoélectrique se situant à pH 6,6, qui après 2 heures de calcination à 1000 °C possède une teneur en $TiO_2$ de 99,5 % en poids, une teneur en $Al_2O_3$ de 0,3 % en poids, une teneur en $SiO_2$ de 0,2 % en poids, une teneur en $Fe_2O_3$ de 0,01 % en poids, et une teneur en ClH de 0,3 % en poids et qui montre une perte pondérale après deux heures de séchage à 105°C, de 1,5 % en poids ainsi qu'après deux heures de calcination à 1000°, une perte de 2 % en poids.

4. Catalyseur selon la revendication 1, caractérisé en ce que le catalyseur de réduction réalisé sous forme de catalyseur complet contient les composants :

    A - oxyde de titane

    $B^1$ - au moins un oxyde choisi dans le groupe consistant en tungstène, silicium, bore, aluminium, phosphore, zirconium, baryum, yttrium, lanthane et cérium,

    $B_2$ - au moins un oxyde choisi dans le groupe constitué par le vanadium, le niobium, le molybdène, le fer, le cuivre et le chrome,

avec un rapport atomique entre les éléments des composants A et B allant de 1 : 0,001 à 1, de préférence de 1 : 0,002 à 0,4 et dans lequel le composant A est présent sous la forme d'un oxyde de titane réactif de grande surface ayant une surface BET de 40 - 500, de préférence de 50 à 300, et en particulier de 60 - 150 $m^2$/g qui se présente complètement ou pour une part prépondérante dans la modification de l'anatase.

5. Catalyseur selon la revendication 1, caractérisé en ce que le catalyseur de réduction consiste en un catalyseur complet en zéolite stable aux acides, contenant du cuivre et/ou du fer, ainsi que le cas échéant, encore du cérium ou du molybdène, la zéolite le cas échéant étant du type mordenite.

6. Catalyseur selon les revendications 1 à 5, caractérisé en ce que le catalyseur d'oxydation présent comme recouvrement sur un segment du côté de la sortie du catalyseur de réduction, consiste en 2 à 70 % en poids de $CeO_2$ de 0 à 20 % en poids de $ZrO_2$, et comme fraction complémentaire à 100 % en poids d'un oxyde d'Aluminium de la série de transition dans lequel l'oxyde d'Aluminium peut renfermer de l'oxyde de fer, des oxydes alcalino-terreux et/ou des oxydes de métaux de terres rares, et en ce que l'on applique sur cette couche de support de 0,01 à 3 % en poids - rapporté au poids total de la couche de support - de platine, de palladium et/ou de rhodium avec un rapport pondéral entre le platine et/ou le palladium et le rhodium éventuellement présent, allant de 2 : 1 à 30 : 1.

7. Utilisation du catalyseur selon l'une des revendications 1 à 6 pour l'épuration catalytique des gaz d'échappement en particulier provenant de moteurs à combustion interne fonctionnant de manière surstoechiomètrique et de turbines à gaz, des substances nocives : oxydes d'azote, hydrocarbures, oxyde de carbone, ammoniac par perte d'énergie provenant de la dénitrification, et, le cas échéant, de l'anhydride sulfureux.

SCHADSTOFFKONVERTIERUNG ALS FUNKTION DER BETRIEBSZEIT, KATALYSATOR ENTSPRECHEND BEISPIEL 1

CH$_4$ UMSATZ

CO
HC (OHNE CH$_4$)
NO$_x$

Ges.- HC

KONVERTIERUNG [%]

BETRIEBSZEIT [ h ]

EP 0 410 440 B1